(19) Europäisches Patentamt / European Patent Office / Office européen des brevets

(11) **EP 1 344 105 B1**

(12) **EUROPÄISCHE PATENTSCHRIFT**

(45) Veröffentlichungstag und Bekanntmachung des Hinweises auf die Patenterteilung:
**26.05.2010 Patentblatt 2010/21**

(21) Anmeldenummer: **01990554.6**

(22) Anmeldetag: **13.12.2001**

(51) Int Cl.:
**G02F 1/37** (2006.01)

(86) Internationale Anmeldenummer:
**PCT/EP2001/014666**

(87) Internationale Veröffentlichungsnummer:
**WO 2002/048785 (20.06.2002 Gazette 2002/25)**

(54) **OPTISCHER RESONANTER FREQUENZWANDLER**

OPTICAL RESONANT FREQUENCY CONVERTER

TRANSFORMATEUR DE FREQUENCE RESONANT OPTIQUE

(84) Benannte Vertragsstaaten:
**AT BE CH CY DE DK ES FI FR GB GR IE IT LI LU MC NL PT SE TR**

(30) Priorität: **14.12.2000 DE 10063977**

(43) Veröffentlichungstag der Anmeldung:
**17.09.2003 Patentblatt 2003/38**

(73) Patentinhaber: **CryLas Crystal Laser Systems GmbH**
**12459 Berlin (DE)**

(72) Erfinder:
• **ZANGER, Eckhard**
  **14554 Seddiner See (DE)**
• **SALZMANN, Manfred**
  **13503 Berlin (DE)**

(74) Vertreter: **Eisenführ, Speiser & Partner**
**Anna-Louisa-Karsch-Strasse 2**
**10178 Berlin (DE)**

(56) Entgegenhaltungen:
**US-A- 5 850 407    US-A- 5 943 350**

• **PATENT ABSTRACTS OF JAPAN vol. 017, no. 207 (P-1525), 22. April 1993 (1993-04-22) & JP 04 347824 A (ASAHI GLASS CO LTD), 3. Dezember 1992 (1992-12-03)**

**Beschreibung**

Die Erfindung betrifft einen optischen resonanten Frequenzwandler, mit einem Ringresonator, der einen ersten Spiegel, einen zweiten Spiegel und einen nichtlinearen Kristall mit einer Eintrittsfläche und einer Austrittsfläche umfaßt, wobei sich bei Einkopplung eines ersten Laserstrahls in den Ringresonator im Ringresonator eine in einer Resonatorebene umlaufende Lichtwelle bildet, die durch die Eintrittsfläche in den nichtlinearen Kristall eintritt und durch die Austrittsfläche aus diesem wieder austritt, und die im nichtlinearen Kristall teilweise in einen zweiten Laserstrahl umgewandelt wird, der eine andere Frequenz als der erste Laserstrahl besitzt. Insbesondere bezieht sich die Erfindung auf einen optischen resonanten Frequenzverdoppeler, also einen Frequenzwandler, der eine Lichwelle mit der doppelten Frequenz einer eingehenden Lichtwelle erzeugt.

Ein optischer resonanter Frequenzwandler wird dazu verwendet, auf besonders effiziente Art aus einem Laserstrahl mit einer Grundwellenlänge, im folgenden Grundwelle genannt, durch nichtlineare Konversion in einem geeigneten nichtlinearen Kristall einen Laserstrahl mit einer höheren, insbesondere der doppelten Frequenz, im folgenden konvertierter Strahl genannt, zu erzeugen. Die Technik der nichtlinearen Konversion wird immer dann eingesetzt, wenn ein geeignetes aktives Lasermaterial zur direkten Erzeugung der gewünschten Wellenlänge nicht verfügbar ist. Wegen der hohen Lebensdauer und hohen Effizienz werden heute zunehmend Halbleiterlaser und diodengepumpte Festkörperlaser (DPSS-Laser) zur Erzeugung von kontinuierlichem Laserlicht im roten und infraroten Spektralbereich verwendet. Kürzere Wellenlängen werden dann üblicherweise durch nichtlineare Konversion erzeugt. Die Konversion kann in mehreren Stufen erfolgen. Bei DPSS-Lasern erfolgt die erste Konversionsstufe zur Erzeugung von sichtbarer Laserstrahlung häufig im Laserresonator selbst ("Intracavity Verdopplung"). Die weitere Konversion zu noch kürzeren Wellenlängen wird bevorzugt außerhalb des Laserresonators durchgeführt. Insbesondere bei der nichtlinearen Erzeugung von kontinuierlichem UV-Laserlicht spielt die resonante Frequenzverdopplung in einem externen Resonator eine bedeutende Rolle, da die für diesen Wellenlängenbereich verfügbaren Kristallmaterialien nur niedrige nichtlineare Koeffizienten besitzen und daher die nichtresonante Konversion zu ineffizient für eine praktische Anwendung ist. Durch die Kombination eines Intracavity-frequenzverdoppelten DPSS-Lasers oder eines Halbleiterlasers mit einem resonanten Frequenzwandler entsteht eine Laserquelle für kontinuierliches UV-Lasedicht, die vielfältige Anwendungen in der Halbleiter- , Konsumelektronik- und Telekomunikationsindustrie hat.

Das Prinzip der resonanten Frequenzverdopplung ist seit langem bekannt (siehe z.B. Ashkin et al. "Resonant Optical Second Harmonic Generation and Mixing", Journal of Quantum Electronics, QE-2, 1966, Seite 109; oder M.Brieger et al. "Enhancement of Single Frequency SHG in a Passive Ring Resonator", Optics Communications 38, 1981, Seite 423). Dabei wird die Grundwelle in einen aus Spiegeln bestehenden optischen Resonator eingekoppelt, der auf die Frequenz der Grundwelle resonant abgestimmt wird. Dazu wird die optische Länge des Resonators mit Hilfe einer geeigneten Vorrichtung so eingestellt, dass sie ein ganzzahliges Vielfaches der Grundwellenlänge beträgt. Wenn die Verluste im Resonator gering sind und der Einkoppelspiegel teiltransparent ausgeführt wird mit einem günstig gewählten Reflexionsgrad, so findet eine Resonanzüberhöhung statt, d. h. die Leistung der im Resonator umlaufenden Lichtwelle ist größer als die Leistung der von außen eingestrahlten Grundwelle. Der Reflexionsgrad R des Einkoppelspiegels ist dann optimal, wenn

$$R = 1-V$$

gilt, wobei V die relativen Verluste der zirkulierenden Lichtwelle bei einem Umlauf im Resonator bedeuten, im Folgenden Resonatorverluste genannt. Unter dieser als "Impedance matching" bezeichneten Bedingung beträgt der Überhöhungsfaktor ("enhancement")

$$A = 1/V,$$

d. h. die im Resonator zirkulierende Lichtwelle hat die A-fache Leistung der eingestrahlten Lichtwelle. In der Praxis werden Überhöhungsfaktoren zwischen 100 und 200 erreicht.

Im Resonator befindet sich ein nichtlinearer Kristall, welcher von der zirkulierenden Grundwelle durchstrahlt wird und durch nichtlineare Konversion eine zweite Lichtwelle mit der doppelten Frequenz erzeugt, die durch einen Resonatorspiegel, der bei dieser doppelten Frequenz transparent ist, aus dem Resonator ausgekoppelt wird.

Damit die Erzeugung des konvertierten Strahls mit brauchbarer Effizienz erfolgt, muss im nichtlinearen Kristall Phasenanpassung vorliegen, d. h. der Brechungsindex des Kristalls bei der Grundwellenlänge muss gleich groß sein wie sein Brechungsindex bei der konvertierten Wellenlänge. Die Phasenanpassung kann durch Winkelabstimmung (kritische Phasenanpassung) oder durch Temperaturanpassung (unkritische Phasenanpassung) erfolgen. Bei unkritischer Phasenanpassung ist im allgemeinen die Effizienz der Frequenzkonversion höher und das Strahlprofil des konvertierten Strahls von höherer Qualität, d. h. näher an der gewünschten Gaußschen Strahlform. Die derzeit verfügbaren Kristallmaterialien ermöglichen jedoch nur für wenige, schmale Wellenlängenbereiche die Anwendung der unkritischen Phasenanpassung. Insbesondere existiert zur Zeit kein Kristallmaterial, mit dem Laserlicht im tiefen UV-Bereich mit unkritischer Phasenanpassung erzeugt werden kann.

Da die Leistung des konvertierten Strahls dem Quadrat der Leistungsdichte der Grundwelle proportional ist, erhöht sich die Effizienz der nichtlinearen Konversion, wenn die Grundwelle im nichtlinearen Kristall fokussiert wird. Daher werden die Resonatorspiegel in der Regel mit sphärisch gekrümmten Oberflächen versehen, sodass sich in der Kristallmitte eine Strahltaille bildet. Durch Verkleinerung der Strahltaille kann die Leistungsdichte im Kristall erhöht werden. Die gleichzeitig zunehmende Divergenz des Strahls im Kristall vermindert jedoch die Konversionseffizienz bei Kristallen, die wesentlich länger sind als der Taillenbereich (Raleigh-Länge) des Strahls. Somit gibt es eine optimale Größe der Strahltaille, die man durch geeignete Wahl der Abstände und der Krümmungsradien der Resonatorspiegel einstellen kann.

Durch die resonante Überhöhung der Grundwellenleistung im Resonator wird die Konversionseffizienz gegenüber einer nichtresonanten Anordnung um einige Größenordnungen gesteigert. So liegen z. B. die mit dem heutigen Stand der Technik erreichbaren Konversionseffizienzen zur Erzeugung von UV-Laserstrahlung bei 266nm zwischen 20 % bis 40 %, wenn eine Grundwellenleistung von 1W bis 5W zur Verfügung steht. In diesem Leistungsbereich tritt schon eine Sättigung der Effizienz ein, sodass sich Entwicklungsanstrengungen zumindest bezüglich der Konversionseffizienz erübrigen. Bei Verwendung von Grundwellenlasern im Leistungsbereich von 10mW bis 100mW, die sich zum Bau besonders kompakter UV-Laser eignen, ist jedoch die Konversionseffizienz eines Frequenzwandlers nach dem Stand der Technik unbefriedigend niedrig, da in diesem Leistungsbereich noch eine quadratischen Abhängigkeit von der Grundwellenleistung vorliegt.

Allgemein ergeben sich Beeinträchtigungen der Ausgangsleistung eines Lasers mit Frequenzwandler aufgrund verschiedener, nachfolgend diskutierter Phänomene. Der Erfindung liegt die Aufgabe zugrunde, einen Frequenzwandler anzugeben, der Leistungsbeeinträchtigungen weitgehend vermeidet.

Die Lösung dieser Aufgabe setzt bei einer Analyse der leistungsbeeinträchtigenden Phänomene an und besteht in folgenden konstruktiven Merkmalen, die einzeln oder in Kombination zu einem resonanten Frequenzwandler mit kritischer Phasenanpassung führen, der eine höhere Konversionseffizienz, eine bessere Strahlqualität und eine höhere Leistungsstabilität des konvertierten Strahls besitzt als Anordnungen nach dem Stand der Technik. Durch eine höhere Konversionseffizienz bei niedriger Grundwellenleistung soll insbesondere die Möglichkeit geschaffen werden, eine Laserquelle für UV-Laserstrahlung herzustellen, die wesentlich kompaktere Abmessungen aufweist, als dies nach dem Stand der Technik möglich ist.

Die Aufgabe wird gelöst durch einen Frequenzwandler gemäß Anspruch 1 oder 3. Die einzeln oder in Kombination die Aufgabe lösenden Merkmale sind bei einem Frequenzwandler der eingangs genannten Art:

-    die Austrittsfläche des nichtlinearen Kristalls ist antireflektiv sowohl für die Frequenz des ersten als auch des zweiten Laserstrahls beschichtet und die Normale der Austrittsfläche steht unter einem Winkel kleiner als 15 Grad zu der aus dem Kristall austretenden Lichtwelle, wobei der zweite Laserstrahl vorzugsweise ebenfalls durch die Austrittsfläche aus dem nichtlinearen Kristall austritt, und wobei der erste Laserstrahl durch den ersten Spiegel in den Ringresonator eintritt und der zweite Laserstrahl durch den ersten Spiegel aus dem Ringresonator austritt

-    alternativ steht die Normale der Austrittsfläche des nichtlinearen Kristalls annähernd unter Brewsterwinkel zur der aus dem Kristall austretenden Lichtwelle, ist die im Ringresonator umlaufende Lichtwelle parallel zur Resonatorebene polarisiert, ist die Austrittsfläche des nichtlinearen Kristalls mit einer Polarisationsstrahlteilerschicht versehen, die für die Frequenz des ersten Laserstrahls im wesentlichen transparent und für die Frequenz des zweiten Laserstrahls reflektierend ist, besitzt der nichtlineare Kristall eine dritte Fläche, die für die Frequenz des zweiten Laserstrahls antireflektiv beschichtet ist und ist der nichtlineare Kristall so geformt, dass der zweite Laserstrahl an der Polarisationsstrahlteilerschicht reflektiert wird und durch die dritte Fläche aus dem nichtlinearen Kristall austritt.

-    in Kombination mit diesen Merkmalen sind die kristallographischen Achsen des nichtlinearen Kristalls bezüglich der Richtung der einfallenden Lichtwelle derart orientiert, dass das Quadrat des effektiven nichtlinearen Koeffizienten nahe oder gleich dem Maximalwert bezüglich seiner Winkelabhängigkeit ist und dass der nichtlineare Kristall einen möglichst geringen Teil der einfallenden Lichtwelle in die zur Ausbreitungsrichtung der einfallenden Lichtwelle entgegengesetzten Richtung streut.

Durch diese Merkmale einzeln oder in Kombination werden gegenüber Anordnungen gemäß dem Stand der Technik die Resonatorverluste reduziert, die Auswirkung der Doppelbrechung auf Effizienz und Strahlqualität in kritisch phasenangepassten Kristallen gemindert und die Rückstreuung der Grundwelle im nichtlinearen Kristall, die zu Instabilität der Ausgangsleistung führen kann, reduziert.

Im folgenden eine Diskussion der Erkenntnisse, auf denen die Erfindung basiert:

In der US 5943350, auf der die Präambeln der Ansprüche 1 und 3 beruhen, wird eine Anordnung zur resonanten Frequenzverdopplung vorgeschlagen, bei der die Grundwelle innerhalb des nichtlinearen Kristalls eine elliptische Form hat. Hier wird ein Kristall in Form eines Prisma oder Trapez verwendet, wobei eine Ebene, die den einfallenden Strahl und die Flächennormale der Eintrittsfläche enthält, und eine Richtung, in der der Kristall einen geringen Akzeptanzwinkel für Phasenanpassung aufweist, parallel sein sollen. Das bedeutet, dass in dieser Anordnung die Hauptschnittebene mit der Einfallsebene der Kristalleintrittsfläche zusammenfällt. Ein Laserstrahl mit rundem Strahlprofil, der in der beschriebenen Art in den Kristall eintritt, erhält durch die Brechung am optisch dichteren Kristallmedium automatisch eine elliptische Form mit der längeren Halbachse in der Hauptschnittebene, wodurch die Wirkung des Walk-Off-Effektes gemindert wird. Das Achsenverhältnis des elliptischen Strahlquerschnitts wird um so größer, je größer der Einfallswinkel gewählt wird. Für ein Achsenverhältnis von 2:1 bei BBO und einer Wellenlänge von 532nm benötigt man beispielsweise einen Einfallswinkel von 65°. Für eine wirksame Eliminierung des Walk-Off-Effektes benötigt man unter Zugrundelegung üblicher Dimensionen für Kristalllänge und Strahlquerschnitt aber eine Achsenverhältnis in der Größenordnung von 10:1. Dies würde einen Einfallswinkel von etwa 85° erfordern.

Bei Frequenzverdopplung nach Typ I muss die Polarisation der Grundwelle senkrecht zur Hauptschnittebene stehen, in diesem Fall also senkrecht auch zur Einfallsebene. Bei Polarisation senkrecht zur Einfallsebene, im folgenden s-Polarisation genannt, und großen Einfallswinkeln treten bei unbeschichteter Eintrittsfläche des Kristalls erhebliche Reflexionsverluste auf. Bei einem Einfallswinkel von 85° würden die Reflexionsverluste über 80 % betragen. Antireflexbeschichtungen sind normalerweise bei Einfallswinkeln oberhalb 50° und s-Polarisation nur sehr begrenzt wirksam. Die Reflexionsverluste lassen sich unter diesen Bedingungen nicht auf einen brauchbaren Wert im Bereich unterhalb von 1 Prozent reduzieren, sodass der Effizienzgewinn durch die Reduzierung des Walk-Off-Effektes durch einen Effizienzverlust durch die höhere Resonatorverluste wieder zunichte gemacht wird. Eine höhere Effizienz kann dagegen erreicht werden, wenn die Grundwelle parallel zur Einfallsebene polarisiert ist, im folgenden p-Polarisation genannt, und gleichzeitig die große Halbachse des Strahlquerschnitts in der Hauptschnittebene liegt.

In JP 04 347 824 A wird ein externer Resonator als Frequenzkonverter für einen Halbleiterlaser beschrieben, der aus zwei Spiegeln und einem trapezförmigen nichtlinearen Kristall besteht. Der fundamentale Laserstrahl (Grundwelle) tritt durch den ersten Spiegel in den Resonator ein und läuft resonant um. Der im nichtlinearen Kristall erzeugte, konvertierte Laserstrahl tritt durch den zweiten Spiegel aus dem Resonator wieder aus. Die Reflexionsverluste der Grundwelle an den Kristallflächen werden dadurch reduziert, dass die Kristallflächen im Brewsterwinkel zum Laserstrahl stehen. Dazu ist es notwendig, dass die Polarisation der Grundwelle in der Einfallsebene der jeweiligen Kristallfläche liegt. Der konvertierte Laserstrahl hat dagegen eine Polarisation, die senkrecht zur Polarisation der Grundwelle steht (Typ I Frequenzkonversion) oder im Winkel von 45° zur Polarisation der Grundwelle steht (Typ II Frequenzkonversion). In beiden Fällen erfährt der konvertierte Laserstrahl hohe Verluste an der Austrittsfläche des Kristalls.

Die meisten Laserquellen reagieren mit Fluktuationen ihrer Ausgangsleistung und Frequenz, wenn das emittierte Laserlicht von einem Spiegel teilweise oder ganz in den Laser zurückreflektiert wird. Bei einem resonanten Frequenzwandler mit linearem Resonator ist grundsätzlich mit solchen Problemen zu rechnen, da der Einkoppelspiegel des Resonators senkrecht zum eingekoppelten Strahl steht und dieser daher exakt in die Laserquelle zurückreflektiert wird. Bei einem Ringresonator liegt dagegen ein Einfallswinkel ungleich Null vor, sodass keine direkte Rückreflexion vom Einkoppelspiegel des Resonators in die Laserquelle auftreten kann. Aus diesem Grund wird der Ringresonator in der Regel dem linearen Resonator vorgezogen. Die im Ringresonator umlaufenden Grundwelle wird jedoch durch den nichtlinearen Kristall zu einem gewissen Anteil in verschiedene Raumrichtungen gestreut. Wegen der resonanten Überhöhung der Grundwelle im Resonator kann die Intensität des gestreuten Lichtes beträchtliche Werte annehmen. Der Anteil des Lichtes, der genau entgegengesetzt zur Richtung der eingestrahlten Grundwelle gestreut wird, kann im Resonator ebenso zirkulieren wie die eingestrahlte Grundwelle selbst, nur in umgekehrter Richtung. Da das gestreute Licht die gleiche Frequenz wie das eingestrahlte Laserlicht besitzt, findet auch für das gestreute Licht eine Resonanzüberhöhung statt, sodass daraus ein gerichteter Laserstrahl mit nicht zu vernachlässigender Intensität wird. Diese im Resonator rückwärts laufende Welle wird vom Einkoppelspiegel des Resonators teilweise transmittiert und dadurch exakt in die Laserquelle zurückgeführt. Die Intensität dieses resonanzverstärkten, zurückgestreuten Lichtes reicht bei bestimmten Laserquellen schon aus, um die Frequenz- und Leistungsstabilität erheblich zu beeinträchtigen. Dies trifft z. B. für Argon-Ionenlaser im Einmodenbetrieb zu. Bei Halbleiterlasern im Einmodenbetrieb ist dieses Phänomen besonders stark ausgeprägt. Die Leistung des konvertierten Strahls unterliegt in diesem Fall sehr großen Schwankungen, da sie sowohl von der Frequenz als auch von der Leistung der Grundwelle empfindlich abhängt.

Die Leistung $P_2$ des im nichtlinearen Kristall erzeugten konvertierten Strahls berechnet sich bei resonanter Frequenzverdopplung gemäß

$$P_2 = \gamma * (A * P_1)^2$$

wobei $P_1$ die Leistung der in den Resonator eingekoppelten Grundwelle und $\gamma$ der Konversionskoeffizient ist, der von der Wellenlänge, dem Strahldurchmesser im Kristall, den Materialeigenschaften des verwendeten Kristalls und der Länge des Kristalls abhängt.

Die Konversionseffizienz $\eta$ des resonanten Frequenzverdopplers ist gegeben durch

$$\eta = P_2 / P_1 = \gamma * A^2 * P_1$$

Bei gegebener Grundwellenleistung $P_1$ läßt sich also die Konversionseffizienz $\eta$ sowohl durch Vergrößern des Überhöhungsfaktors A als auch durch Vergrößern des Konversionskoeffizienten $\gamma$ erhöhen.

Um den Überhöhungsfaktor A = 1/V zu vergrößern, müssen die Resonatorverluste V verringert werden. Wegen der quadratischen Abhängigkeit vom Überhöhungsfaktor A ist die Konversionseffizienz sehr empfindlich von den Resonatorvedusten abhängig. Die Resonatorveduste setzen sich im wesentlichen zusammen aus der Resttransmission aller Resonatorspiegel mit Ausnahme des Einkoppelspiegels, den Refexionsverlusten an den Grenzflächen des Kristalls, den Streu- und Absorptionsverlusten im Kristallmaterial und dem Verlust durch die nichtlineare Konversion. Bei den hier betrachteten Grundwellenleistungen und Kristallmaterialien zur Erzeugung von UV-Licht spielt der Verlust durch die nichtlineare Konversion eine untergeordnete Rolle, da die nichtlinearen Koeffizienten dieser Materialien so niedrig sind, dass der Anteil der pro Kristalldurchgang konvertierten Leistung vernachlässigbar klein ist.

Einen wesentlichen Beitrag zu den Resonatorverlusten stellen die Streu- und Absorptionsverluste im nichtlinearen Kristall dar. In der Regel ist dies der größte Einzelbeitrag zu den Resonatorverlusten. Diese Verluste sind proportional zu der Länge des Lichtweges der Grundwelle im Kristall. Durch Reduktion dieses Lichtweges lassen sich daher die Verluste reduzieren. Im Hinblick auf möglichst hohe Konversionseffizienz sind daher Anordnungen ungünstig, bei denen die Grundwelle den Kristall auf Lichtwegen durchläuft, die keinen Beitrag zur Konversion liefern. Dies ist z.B. bei monolithischen (siehe z.B. US 5027361) oder halbmonolithischen (siehe z.B. US 6069903) Anordnungen der Fall, wo eine oder mehrere Kristallflächen als Resonatorspiegel ausgebildet sind und die Grundwelle innerhalb des Kristalls unter einem Winkel gegenüber der Einstrahlrichtung reflektieren. Der Lichtweg innerhalb des Kristalls besteht dann aus mehreren Abschnitten, die nicht parallel zueinander sind. Daher kann nur für einen der Abschnitte Phasenanpassung vorliegen, während jedoch alle Abschnitte Streuverluste erzeugen. In der Erfindung wird daher eine Anordnung bevorzugt, bei denen keine Reflexionen der Grundwelle innerhalb des Kristalls stattfinden und daher der Lichtweg im Kristall auf seiner vollen Länge zur Frequenzkonversion beiträgt.

Die Streuung der Grundwelle im nichtlinearen Kristall vermindert nicht nur die Konversionseffizienz durch erhöhte Resonatorveriuste, sondern kann auch zu einer instabilen Leistung führen, da die Streuung zum Teil entgegengesetzt zur Richtung der eingestrahlten Grundwelle erfolgt und die Laserquelle durch das zurückgestreute Licht in der Stabilität beeinträchtigt werden kann. Da Streuung von Laserstrahlung in manchen nichtlinearen Kristallen stark richtungsabhängig ist (siehe Augustov et al., Appl. Phys. A29, 1982, Seite 169), kann die störende Rückstreuung durch eine geeignete Orientierung der optischen Achse des Kristalls in Bezug auf die Richtung der eingestrahlten Grundwelle reduziert werden.

Damit die Bedingung für kritische Phasenanpassung erfüllt ist, d. h. der Brechungsindex für den ordentlichen und den außerordentlichen Strahl gleich groß sind, muss der zwischen der optischen Achse des Kristalls und der Ausbreitungsrichtung der Grundwelle eingeschlossene Winkel, genannt Phasenanpassungswinkel, einen bestimmten wellenlängenabhängigen Betrag haben. Die Phasenanpassung ist jedoch vom Vorzeichen der beiden Richtungen unabhängig. Ebenso ist die Größe des Konversionskoeffizienten von den Winkeln der Einstrahlrichtung der Grundwelle zu den kristallographischen Achsen des Kristalls abhängig, nicht aber vom Vorzeichen der Richtung.

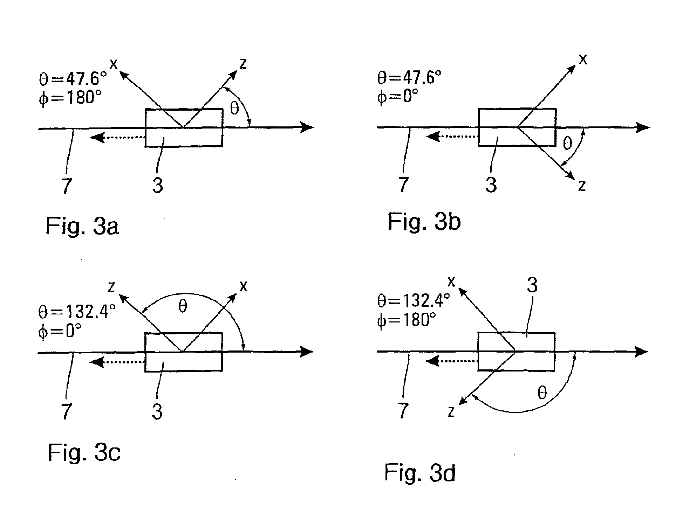

Wie in Figur 3 am Beispiel der Frequenzverdopplung von Laserstrahlung der Wellenlänge 532nm nach Typ I mit dem Kristall BBO dargestellt wird, existieren mehrere Möglichkeiten für die relative Orientierung von Strahlrichtung und kristallographischen Achsen, die bezüglich der Phasenanpassung und der Größe des Konversionskoeffizienten gleichwertig sind, jedoch eine unterschiedlich starke Rückwärtsstreuung der Grundwelle aufweisen. In Figur 3 liegen die kristallographischen Achsen x und z des Kristalls jeweils in der Papierebene, während die y-Achse senkrecht zur Papierebene steht. Die z-Achse wird allgemein als die optische Achse des Kristalls bezeichnet, $\theta$ und $\varphi$ sind die Polarwinkel der Ausbreitungsrichtung der Grundwelle bezogen auf die kristallographischen Achsen des Kristalls. Bei einer Wellenlänge von 532nm beträgt der Phasenanpassungswinkel für BBO:

$$\theta = 47.6°$$

Da die Phasenanpassungsbedingung unabhängig vom Vorzeichen der Ausbreitungsrichtung des Laserstrahls ist, liegt bei

$$\theta = 180° - 47.6° = 132.4°$$

ebenfalls Phasenanpassung vor.

Der Konversionskoeffizient $\gamma$ ist proportional zum Quadrat des effektiven nichtlinearen Koeffizienten $d_{eff}$ (siehe Boyd et al., Journal of Applied Physics 39,1968, Seite 3597), der von beiden Polarwinkeln $\theta$ und $\varphi$ abhängt und bei BBO gegeben ist durch:

$$d_{eff} = (d_{11}\cos 3\phi - d_{22}\sin 3\phi)\cos\theta + d_{31}\sin\theta$$

Dabei sind $d_{11}$, $d_{22}$ und $d_{31}$ die nichtlinearen Koeffizienten zweiter Ordnung (siehe z.B. Kato, IEEE Journal of Quantum Electronics, QE-22, 1986, Seite 1013). Da die Koeffizienten $d_{22}$ und $d_{31}$ gegenüber $d_{11}$ vernachlässigbar klein sind, beträgt das Quadrat des effektiven nichtlinearen Koeffizienten in guter Näherung

$$d_{eff}{}^2 = d_{11}{}^2\cos^2 3\phi * \cos^2\theta$$

Anstelle des für den Winkel $\varphi$ üblichen Wertes von 0° können daher auch die Werte 60°, 120° und 180° verwendet werden, ohne dass Einbußen in der Größe des Konversionskoeffizienten $\gamma$ in Kauf genommen werden müssen. Insbesondere sind die vier in Figur 6 dargestellten Fälle mit den Werten $\theta$=47.6° bzw. 132.4° und $\varphi$=0° bzw. 180° bezüglich der Konversionseffizienz und der Phasenanpassung gleichwertig.

Bei dem Kristall BBO wurde in den Anordnungen a) und b) nach Figur 3 eine stärkere Rückstreuung festgestellt als bei den Anordnungen c) und d). Bei der resonanten Frequenzverdopplung eines Argon-Ionenlasers, bei dem mittels Intracavity-Etalon Einmoden-Betrieb erzwungen wurde, traten bei Verwendung der Anordnungen a) und b) Modensprünge und Intensitätsschwankungen auf, während bei den Anordnungen c) und d) stabiler Betrieb möglich war. Somit können die Stabilitätseigenschaften eines durch resonante Frequenzverdopplung erzeugten Laserstrahls durch die richtige Orientierung der Kristallachsen in Bezug auf die Ausbreitungsrichtung der Grundwelle verbessert werden.

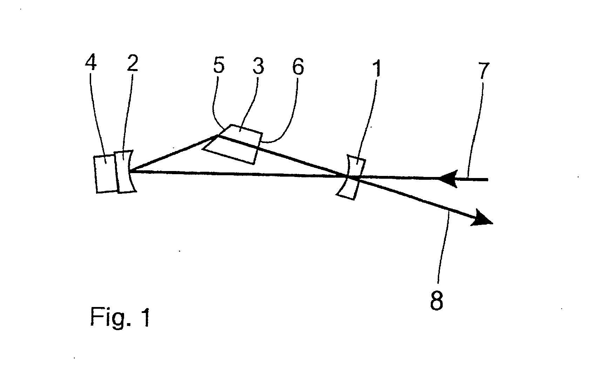

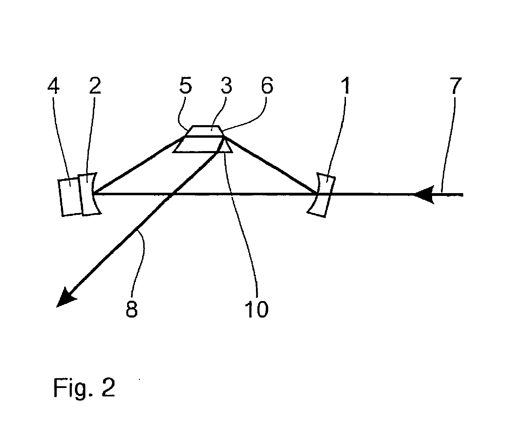

Bei einem Kristall mit einer spiegelsymmetrischen, kubischen oder prismenartigen Form wie in Figur 2 oder einer punktsymmetrischen, parallelogrammartigen Form mit Brewstereinfallswinkel kann eine Anordnung nach a) oder b) in Figur 3 durch eine geeignete Drehung des Kristalls immer in eine der Anordnungen nach c) oder d) überführt werden. Bei der Herstellung solcher Kristalle muss daher keine besondere Sorgfalt bezüglich des Vorzeichens der Kristallachsen aufgewandt werden, da der Kristall durch entsprechende Drehung auch nachträglich in eine der günstigen Anordnungen c) oder d) nach Figur 3 gebracht werden kann. Dagegen ist bei einem asymmetrischen Kristall 3 wie in Figur 1 die bevorzugte Ausbreitungsrichtung der Grundwelle im Kristall schon durch die Ausführung der Kristallflächen vorgegeben. Eine Umkehrung der Ausbreitungsrichtung würde beim Kristall in Figur 1 die Verluste des konvertierten Strahls beim Austritt aus dem Kristall wesentlich erhöhen. Daher muß der Hersteller solcher Kristalle präzisere Angaben bezüglich der Orientierung der Kristallachsen erhalten, als dies momentan üblich ist. Bisher ist es lediglich üblich, Winkelbeträge ohne Rücksicht auf die Vorzeichen der Achsen zu spezifizieren.

Ein Merkmal dieser Erfindung ist es daher, dass die Lage der Kristallachsen des nichtlinearen Kristalls im Resonator nicht nur durch Angabe des Phasenanpassungswinkels, sondern auch durch Angabe des Vorzeichens der Achsen festgelegt wird.

Einen weiteren wesentlichen Beitrag zu den Resonatorverlusten stellen die Reflexionsverluste an der Ein- und Austrittsfläche des Kristalls dar. Die Reflexionsverluste können entweder durch Antireflexbeschichtungen oder durch Lichteinfall unter Brewsterwinkel reduziert werden.

Bei Verwendung des Brewsterwinkels können die Reflexionsverluste deutlich unter 0.1 % reduziert werden. Bei Antireflexbeschichtungen werden in der Regel Reflexionsgrade zwischen 0.1 % und 0.2 % erreicht. Deshalb wird in vielen Anordnungen zur resonanten Frequenzverdopplung der Einfall unter Brewsterwinkel bevorzugt (siehe z. B. Adams et al., Optics Communications 79, 1990, Seite 219; Angelis et al., Applied Physics B 62, 1996, Seite 333; Bourzeix et al. Optics Communications 99, 1993, Seite 89). In diesen Anordnungen wird der Kristall in Form eines Parallelogramms geschnitten, sodass Ein- und Austrittsseite unter Brewsterwinkel zum Laserstrahl stehen. Andere Anordnungen bevorzugen einen kubischen Kristallschnitt, bei dem die Ein- und Austrittsseite des Kristalls annähernd senkrecht zum Laserstrahl stehen und antireflexbeschichtet sind (siehe z.B. Kondo et al. Optics Letters 23, 1998, Seite 195).

Der Reflexionsverlust bei Einfall unter Brewsterwinkel ist stark von der Polarisation der Lichtwelle abhängig. Um niedrige Resonatorverluste zu erreichen, muss die Grundwelle p-polarisiert sein. Da der im Kristall erzeugte konvertierte Strahl eine andere Polarisationsrichtung besitzt, erleidet dieser einen hohen Reflexionsveriust an der Brewsterfläche. Bei der am häufigsten verwendeten Konversion nach Typ I ist die Polarisation des konvertierten Strahls senkrecht zur Polarisation der Grundwelle, d. h. s-polarisiert. Der Reflexionsverlust für den konvertierten Strahl beträgt in diesem Fall etwa 20 %. Dieser Reflexionsverlust ließe sich zwar auch bei diesem Einfallswinkel durch eine Antireflexbeschichtung reduzieren, jedoch würde eine solche Beschichtung gleichzeitig die Verluste für die Grundwelle erhöhen. Dies soll jedoch vermieden werden, da die Grundwellenveduste einen noch stärkeren Einfluß auf die Ausgangsleistung haben. Die Reflexionsverluste des konvertierten Strahls an der Brewsterfläche werden bei den bekannten Anordnungen in Kauf genommen, da die geringeren Verluste der Grundwelle diesen Verlust kompensieren und außerdem die Herstellung der Kristalle mit unbeschichteten Brewsterflächen relativ einfach und kostengünstig ist.

Im Gegensatz zum Brewsterwinkel können für kleine Einfallswinkel (unter 15 Grad) Antireflexbeschichtungen so hergestellt werden, dass die Reflexionsverluste für beide Polarisationsrichtungen zwischen 0.1 % und 0.2 % betragen. Daher ist es zweckmäßig, nur die Eintrittsseite des nichtlinearen Kristalls mit einer unbeschichteten Brewsterfläche zu versehen, da diese Fläche kein UV-Licht transmittieren muss, die Austrittsseite jedoch mit einer antireflexbeschichteten Fläche mit kleinem Einfallswinkel oder senkrechtem Einfall zu versehen, die niedrige Reflexionsverluste sowohl für die Grundwelle als auch für die zweite Harmonische gewährleistet. Die resultierende Konversionseffizienz bei einer solchen asymmetrischen Kristallform ist besser als bei den bisher üblichen entweder kubischen Formen oder parallelogrammartigen Brewsterformen.

Bei einem Einfallswinkel nahe dem Brewsterwinkel kann auch eine Beschichtung aufgebracht werden, die sehr geringe Reflexionsverluste für die p-Polarisation und einen sehr hohen Reflexionsgrad für die s-Polarisation besitzen. Solche Schichten werden allgemein als Polarisationsstrahlteilerschichten bezeichnet. Wird die unter Brewsterwinkel stehende Austrittsseite des Kristalls mit einer Polarisationsstrahlteilerschicht versehen, so wird die p-polarisierte Grundwelle mit sehr geringen Verlusten transmittiert, während der konvertierte Strahl nahezu vollständig reflektiert wird. Durch eine dritte Fläche des Kristalls, die antireflexbeschichtet ist, kann der konvertierte Strahl nahezu verlustfrei ausgekoppelt werden. Da sich der konvertierte Strahl dann nicht mehr kollinear mit der Grundwelle ausbreitet, muss er nicht durch den Auskoppelspiegel des Resonators geführt werden und erleidet daher auch keinen weiteren Reflexionsverlust an diesem Spiegel. Da der Reflexionsverlust des konvertierten Strahls an einer Antireflexschicht kleiner ist als an einem Resonatorspiegel, der hochreflektierend für die Grundwelle ist, wird der konvertierte Strahl bei diesem Verfahren effizienter ausgekoppelt. Das Verfahren hat zudem den Vorteil, dass durch die UV-Strahlung keine Degradationsschäden an einem Resonatorspiegel auftreten können.

Eine weitere Ursache für Resonatorveriuste stellt die Resttransmission der Resonatorspiegel dar. Bei üblichen Beschichtungen beträgt die Resttransmission zwischen 0.1 % und 0.2 %. Abgesehen vom Einkoppelspiegel trägt daher jeder Resonatorspiegel merklich zu den Resonatorverlusten bei. Daher ist es zweckmäßig, die Zahl der Resonatorspiegel auf das notwendige Minimum zu reduzieren. Bei einem Ringresonator ist die Mindestzahl der Resonatorspiegel drei, solange sich keine weiteren Elemente im Resonator befinden. In der Erfindung wird der nichtlineare Kristall daher in einer Trapezform ausgeführt, sodass seine Eintrittsfläche einen von Null verschiedenen Winkel zu seiner Austrittsfläche bildet. Da die im Resonator umlaufende Grundwelle durch den nichtlinearen Kristall gebrochen wird, genügen zwei Resonatorspiegel, um einen Ringresonator zu realisieren.

Die Erfindung wird anhand von Ausführungsbeispielen und Zeichnungen näher erläutert. Es zeigen:

Figur 1    die schematische Darstellung einer ersten Ausführungsform,

Figur 2    die schematische Darstellung einer zweiten Ausführungsform,

Figur 3    vier mögliche Orientierungen der Achsen des nichtlinearen Kristalls in Bezug auf die Laserstrahlrichtung mit gleicher Konversionseffizienz, aber unterschiedlicher Streuung.

In der Ausführungsform nach Figur 1 wird der Spiegel 1 sowohl als Einkoppelspiegel für die Grundwelle 7 als auch als Auskoppelspiegel für den konvertierten Strahl 8 verwendet. Der Spiegel 1 wird deshalb mit einer Beschichtung versehen, die bei der Grundwellenlänge eine Reflektivität R besitzt, die möglichst nahe an dem optimalen Wert R=1-V liegt, wobei V die Resonatorveriuste bedeuten. Bei der Wellenlänge des konvertierten Strahls soll die Beschichtung eine möglichst hohe Transmission besitzen. Der Resonatorspiegel 2 wird mit einer für die Grundwellenlänge möglichst hochreflektierenden Beschichtung versehen und auf einem Piezoelement 4 befestigt, sodass durch Anlegen einer elektrischen Spannung der Spiegel bewegt werden kann und der Resonator dadurch auf die Frequenz der Grundwelle abgestimmt werden kann. Da der Spiegel 2 weder zur Einkopplung der Grundwelle noch zur Auskopplung des konvertierten Strahls benutzt wird, kann sowohl der Spiegel als auch das Piezoelement sehr kleine Abmessungen haben, ohne dass eine Aperturbegrenzung eines schräg hindurchtretenden Strahls auftritt. Wegen der damit verbundenen geringen effektiven Masse des gesamten Systems aus Spiegel und Piezoelement können Störungen durch äußere Einflüsse, wie z.B. akustische Schwingungen, durch eine aktive Stabilisierung der Resonatorlänge besonders gut kompensiert werden, wodurch sich die Leistungsstabilität der erzeugten konvertierten Strahlung verbessert.

Beide Resonatorspiegel werden mit sphärisch gekrümmten Oberflächen versehen, deren Radien so bemessen sind, dass die im Resonator umlaufende Grundwelle periodisch reproduziert wird und sich in der Kristallmitte eine Strahltaille bildet, deren Radius möglichst günstig für die Konversionseffizienz ist. Da die umlaufende Lichtwelle in einem Ringresonator nicht senkrecht auf die Resonatorspiegel auftrifft, sind die Brennweiten in der Richtung, die in der Einfallsebene liegt und in der dazu senkrechten Richtung unterschiedlich groß. Dadurch können die Strahltaillen dieser Richtungen an verschiedenen Orten im Resonator liegen und unterschiedlich groß sein, was allgemein als Astigmatismus bezeichnet wird. Beim Durchgang des Laserstrahls durch den Kristall unter nicht senkrechtem Einfall entsteht ebenfalls Astigmatismus, jedoch mit einer gegenläufigen Wirkung (siehe z. B. Kogelnik et al., IEEE Journal of Quantum Electronics, QE-8, 1972, Seite 373). Durch eine geeignete Wahl der Einfallswinkel auf die Spiegel, der Winkel der Kristallflächen zueinander und den Abständen zwischen den verschiedenen optischen Elementen kann es erreicht werden, dass im Abschnitt des Resonators zwischen Spiegel 1 und Spiegel 2 kein Astigmatismus vorliegt, d. h. der Strahlquerschnitt des Laserstrahls ist an jeder Stelle zwischen den beiden Spiegeln rund. Da die meisten Laserstrahlquellen ein rundes Strahlprofil liefern, wird hierdurch die Anpassung ("Mode Matching") der eingestrahlten Grundwelle an die Grundmode des Resonators wesentlich vereinfacht. Das Mode Matching kann mit einer normalen sphärischen Linse durchgeführt werden, während die sonst notwendigen astigmatischen Korrekturen nicht benötigt werden.

Die Eintrittsfläche 5 des nichtlinearen Kristalls 3 wird unter Brewsterwinkel zum Laserstrahl angeordnet. Die Austrittsfläche 6 steht im wesentlichen senkrecht zum Strahl und trägt eine Antireflexbeschichtung, die sowohl bei der Grundwellenlänge als auch bei der konvertierten Wellenlänge eine möglichst hohe Transmission aufweist. Die Orientierung der kristallographischen Achsen des nichtlinearen Kristalls in Bezug auf die Laserstrahlrichtung wird aus den Möglichkeiten, die bezüglich der Phasenanpassung und der Konversionseffizienz gleichwertig sind, so gewählt, dass die Rückstreuung der Grundwelle durch das Kristallmaterial möglichst gering ist. Bei einem BBO-Kristall sind das z. B. die in Figur 3 c) und d) dargestellten Orientierungen. Wie schon weiter oben erklärt wurde, verbessert diese Maßnahme die Leistungsstabilität der erzeugten frequenzverdoppelten Strahlung bei Verwendung von Laserquellen, die empfindlich auf Rückstreuung reagieren.

In einer anderen Ausführungsform nach Figur 2 steht die Fläche 6 unter Brewsterwinkel zum Laserstrahl und trägt eine Polarisationsstrahlteilerschicht, die für die Grundwelle hochtransparent und für die verdoppelte Frequenz hochreflektierend ist. Der im Kristall erzeugte konvertierte Strahl wird an der Fläche 6 reflektiert und tritt durch eine weitere Fläche 10, die für die verdoppelte Frequenz antireflexbeschichtet ist, aus dem Kristall aus. Die Auskoppelverluste für den konvertierten Strahl sind in dieser Ausführungsform dadurch noch geringer als bei der Ausführungsform nach Figur 1. Ansonsten entspricht die Ausführungsform nach Figur 2 der nach Figur 1.

Die Erfindung ist nicht auf die hier beschriebenen Ausführungsformen beschränkt. Vielmehr ist es möglich, durch Kombination der Merkmale weitere Ausführungsformen zu realisieren.

**Patentansprüche**

1.  Optischer resonanter Frequenzwandler mit einem Ringresonator, der einen ersten Spiegel (1), einen zweiten Spiegel (2) und einen nichtlinearen Kristall (3) mit einer Eintrittsfläche (5) und einer Austrittsfläche (6) umfasst, die so angeordnet sind, dass sich bei Einkopplung eines ersten Laserstrahls (7) in den Ringresonator im Ringresonator eine in einer Resonatorebene umlaufende Grundwelle mit einer Grundwellenlänge bildet, die durch die Eintrittsfläche (5) in den nichtlinearen Kristall (3) eintritt und durch die Austrittsfläche (6) aus diesem wieder austritt, wobei die Grundwelle im nichtlinearen Kristall (3) teilweise in einen zweiten Laserstrahl (8) anderer Frequenz als der erste Laserstrahl umgewandelt wird,
    wobei die Normale der Eintrittsfläche (5) des nichtlinearen Kristalls (3) annähernd unter Brewsterwinkel zu der in den nichtlinearen Kristall einfallenden Grundwelle (7) steht und die Austrittsfläche (6) des nichtlinearen Kristalls (3) antireflektiv für die Frequenz des ersten Laserstrahls beschichtet ist, **dadurch gekennzeichnet, dass**

    - die in den nichtlinearen Kristall einfallende Grundwelle parallel zur Resonatorebene polarisiert ist;
    - die Austrittsfläche (6) des nichtlinearen Kristalls (3) antireflektiv auch für die Frequenz des zweiten Laserstrahls beschichtet ist; und dass
- die Normale der Austrittsfläche (6) unter einem Winkel kleiner als 15 Grad zu der aus dem nichtlinearen Kristall austretenden Grundwelle (8) steht.

**2.** Frequenzwandler nach Anspruch 1, **gekennzeichnet durch** eine Anordnung von erstem und zweiten Spiegel (1, 2) sowie nichtlinearem Kristall (3) derart, dass der zweite Laserstrahl, der eine höhere Frequenz als der erste Laserstrahl besitzt, ebenfalls **durch** die Austrittsfläche (6) aus dem nichtlinearen Kristall (3) austritt, wobei der erste Laserstrahl **durch** den ersten Spiegel (1) in den Ringresonator eintritt und der zweite Laserstrahl durch den ersten Spiegel (1) aus dem Ringresonator austritt.

**3.** Optischer resonanter Frequenzwandler mit einem Ringresonator, der einen ersten Spiegel (1), einen zweiten Spiegel (2) und einen nichtlinearen Kristall (3) mit einer Eintrittsfläche (5) und einer Austrittsfläche (6) umfasst, die derart angeordnet sind, dass sich bei Einkopplung eines ersten Laserstrahls (7) in den Ringresonator im Ringresonator eine in einer Resonatorebene umlaufende Grundwelle mit einer Grundwellenlänge bildet, die durch die Eintrittsfläche (5) in den nichtlinearen Kristall (3) eintritt und durch die Austrittsfläche (6) aus diesem wieder austritt, und die im nichtlinearen Kristall (3) teilweise in einen zweiten Laserstrahl (8) umgewandelt wird, der eine höhere Frequenz als der erste Laserstrahl besitzt, wobei
die Normale der Eintrittsfläche (5) des nichtlinearen Kristalls (3) annähernd unter Brewsterwinkel zur der in den nichtlinearen Kristall einfallenden Grundwelle steht und
die Normale der Austrittsfläche (6) des nichtlinearen Kristalls (3) annähernd unter Brewsterwinkel zur der aus dem nichtlinearen Kristall austretenden Grundwelle steht, **dadurch gekennzeichnet, dass**

- die im Ringresonator umlaufende Grundwelle parallel zur Resonatorebene polarisiert ist,
- die Austrittsfläche des nichtlinearen Kristalls (3) mit einer Polarisationsstrahlteilerschicht versehen ist, die für die Frequenz des ersten Laserstrahls im wesentlichen transparent und für die Frequenz des zweiten Laserstrahls reflektierend ist,
- der nichtlineare Kristall (3) eine dritte Fläche besitzt, die für die Frequenz des zweiten Laserstrahls antireflektiv beschichtet ist und
- der zweite Laserstrahl an der Polarisationsstrahlteilerschicht reflektiert wird und durch die dritte Fläche aus dem nichtlinearen Kristall (3) austritt.

**4.** Laseranordnung, mit einer Laserquelle, die einen ersten Laserstrahl einer Grundwellenlänge emittiert, und mit einem optischen resonanten Frequenzwandler nach einem der vorstehenden Ansprüche.

## Claims

**1.** Optical resonant frequency converter having a ring resonator which comprises a first mirror (1), a second mirror (2) and a non-linear crystal (3) having an entry surface (5) and an exit surface (6), which are arranged such that when a first laser beam (7) is directed into the ring resonator a carrier which circulates in the resonator plane is formed in the ring resonator with a carrier wavelength, which enters the non-linear crystal (3) through the entry surface (5) and exits from it again through the exit surface (6), the carrier being partly converted in the non-linear crystal (3) into a second laser beam (8) of a different frequency from the first laser beam,

- the perpendicular to the entry surface (5) of the non-linear crystal (3) being located substantially at a Brewster angle to the carrier (7) incident on the non-linear crystal and the exit surface (6) of the non-linear crystal (3) having a coating that is antireflective to the frequency of the first laser beam,

**characterised in that**

- the carrier incident on the non-linear crystal is polarised parallel to the resonator plane;
- the exit surface (6) of the non-linear crystal (3) also has a coating that is antireflective to the frequency of the second laser beam; and **in that**
- the perpendicular to the exit surface (6) is at an angle of less than 15 degrees to the carrier (8) exiting from the non-linear crystal.

**2.** Frequency converter according to claim 1, **characterised by** an arrangement of the first and second mirror (1, 2) and non-linear crystal (3) such that the second laser beam, which has a higher frequency than the first laser beam, also exits from the non-linear crystal (3) through the exit surface (6), the first laser beam entering the ring resonator through the first mirror (1) and the second laser beam exiting from the ring resonator through the first mirror (1).

3. Optical resonant frequency converter having a ring resonator which comprises a first mirror (1), a second mirror (2) and a non-linear crystal (3) having an entry surface (5) and an exit surface (6), which are arranged such that when a first laser beam (7) is directed into the ring resonator a carrier which circulates in the resonator plane is formed in the ring resonator with a carrier wavelength, which enters the non-linear crystal (3) through the entry surface (5) and exits from it again through the exit surface (6), and which is partly converted in the non-linear crystal (3) into a second laser beam (8) which has a higher frequency than the first laser beam, the perpendicular to the entry surface (5) of the non-linear crystal (3) being located substantially at a Brewster angle to the carrier incident on the non-linear crystal and the perpendicular to the exit surface (6) of the non-linear crystal (3) being located substantially at a Brewster angle to the carrier exiting from the non-linear crystal,
**characterised in that**

- the carrier circulating in the ring resonator is polarised parallel to the resonator plane;
- the exit surface of the non-linear crystal (3) is provided with a polarisation beam splitting coating which is substantially transparent to the frequency of the first laser beam and is reflective to the frequency of the second laser beam,
- the non-linear crystal (3) has a third surface which has a coating that is antireflective to the frequency of the second laser beam and
- the second laser beam is reflected by the polarisation beam splitting coating and exits from the non-linear crystal through the third surface (3).

4. Laser arrangement having a laser source which emits a first laser beam of a carrier wavelength and having an optical resonant frequency converter according to one of the preceding claims.

**Revendications**

1. Convertisseur de fréquence optique résonant, ayant un résonateur toroïdal, qui comprend un premier miroir (1), un deuxième miroir (2) et un cristal (3) non linéaire, ayant une surface (5) d'entrée et une surface (6) de sortie, qui sont disposées de manière à ce que, lors de l'injection d'un premier faisceau (7) laser dans le résonateur toroïdal, il se forme dans le résonateur toroïdal une onde fondamentale tournant dans un plan du résonateur et ayant une longueur d'onde fondamentale, qui pénètre dans le cristal (3) non linéaire par la surface (5) d'entrée et en ressort par la surface (6) de sortie, dans lequel l'onde fondamentale est transformée dans le cristal (3) non linéaire en partie en un deuxième faisceau (8) laser ayant une fréquence autre que le premier faisceau laser, dans lequel la normale à la surface (5) d'entrée du cristal (3) non linéaire fait à peu près l'angle de Brewster par rapport à l'onde (7) fondamentale incidente dans le cristal non linéaire et la surface (6) de sortie du cristal (3) non linéaire est revêtue d'une manière non réfléchissante pour la fréquence du premier faisceau laser, **caractérisé en ce que**

- l'onde fondamentale incidente dans le cristal non linéaire est polarisée parallèlement au plan du résonateur,
- la surface (6) de sortie du cristal (3) non linéaire est revêtue d'une manière non réfléchissante également pour la fréquence du deuxième faisceau laser et **en ce que**
- la normale à la surface (6) de sortie fait un angle plus petit que 15 degrés par rapport à l'onde (8) fondamentale sortant du cristal non linéaire.

2. Convertisseur de fréquence suivant la revendication 1, **caractérisé par** un agencement du premier et du deuxième miroirs (1, 2) ainsi que du cristal (3) non linéaire, tel que le deuxième faisceau laser qui a une fréquence plus haute que le premier faisceau laser sort également du cristal (3) non linéaire par la surface (6) de sortie, le premier faisceau laser entrant dans le résonateur toroïdal en passant par le premier miroir (1) et le deuxième faisceau laser sortant du résonateur toroïdal en passant par le premier miroir (1).

3. Convertisseur de fréquence optique résonant ayant un résonateur toroïdal, qui comprend un premier miroir (1), un deuxième miroir (2) et un cristal (3) non linéaire, ayant une surface (5) d'entrée et une surface (6) de sortie, qui sont disposées de manière à ce que, lors de l'injection d'un premier faisceau (7) laser dans le résonateur toroïdal, il se forme dans le résonateur toroïdal une onde fondamentale tournant dans un plan du résonateur et ayant une longueur d'onde fondamentale, qui pénètre dans le cristal (3) non linéaire par la surface (5) d'entrée et en ressort par la surface (6) de sortie et qui est transformée dans le cristal (3) non linéaire en partie en un deuxième faisceau (8) laser, qui a une fréquence plus haute que le premier faisceau laser, dans lequel la normale à la surface (5) d'entrée du cristal (3) non linéaire fait à peu près l'angle de Brewster par rapport à l'onde fondamentale incidente dans le cristal non linéaire et la normale à la surface (5) d'entrée du cristal (3) non linéaire fait à peu près l'angle de Brewster par rapport à l'onde fondamentale sortant du cristal non linéaire, **caractérisé en ce que**

- l'onde fondamentale tournant dans le résonateur toroïdal est polarisée parallèlement au plan du résonateur,
- la surface de sortie du cristal (3) non linéaire est munie d'une couche de division de faisceau de polarisation, qui est sensiblement transparente pour la fréquence du premier faisceau laser et réfléchissante pour la fréquence du deuxième faisceau laser,
- le cristal (3) non linéaire a une troisième surface, qui est revêtue d'une manière non réfléchissante pour la fréquence du deuxième faisceau laser, et
- le deuxième faisceau laser est réfléchi sur la couche de division de faisceau de polarisation et sort du cristal (3) non linéaire par la troisième surface.

4. Dispositif à laser ayant une source laser qui émet un premier faisceau laser d'une longueur d'onde fondamentale et un convertisseur de fréquence optique résonant suivant l'une des revendications précédentes.

Fig. 1

EP 1 344 105 B1

Fig. 2

13

Fig. 3a

Fig. 3b

Fig. 3c

Fig. 3d

**IN DER BESCHREIBUNG AUFGEFÜHRTE DOKUMENTE**

**In der Beschreibung aufgeführte Patentdokumente**

- US 5943350 A
- JP 04347824 A
- US 5027361 A
- US 6069903 A


**In der Beschreibung aufgeführte Nicht-Patentliteratur**

- **Augustov et al.** *Appl. Phys.,* 1982, vol. A29, 169
- **Adams et al.** *Optics Communications,* 1990, vol. 79, 219
- **Angelis et al.** *Applied Physics,* 1996, vol. B 62, 333
- **Bourzeix et al.** *Optics Communications,* 1993, vol. 99, 89
- **Kondo et al.** *Optics Letters,* 1998, vol. 23, 195
- **B. Kogelnik et al.** *IEEE Journal of Quantum Electronics,* 1972, vol. QE-8, 373